# EUROPEAN PATENT APPLICATION

(11) **EP 4 632 838 A1**
(43) Date of publication of application: **15.10.2025**
(21) Application number: 25167400.8
(22) Date of filing: 31.03.2025
(51) Int. Cl.: H01M 4/139, B05D 1/30, B29C 31/02, B30B 15/30, H01M 4/04

(54) **DRY ELECTRODE MANUFACTURING DEVICE AND MANUFACTURING METHOD OF THE SAME**

(30) Priority: 09.04.2024 KR 20240048176
(71) Applicant: SAMSUNG SDI CO., LTD., Yongin-si, Gyeonggi-do 17084 (KR)
(72) Inventor: KIM, KANGMIN, 17084 Yongin-si, Gyeonggi-do (KR); KIM, SANGPIL, 17084 Yongin-si, Gyeonggi-do (KR); YEON, DONG HEE, 17084 Yongin-si, Gyeonggi-do (KR); LEE, JINHYON, 17084 Yongin-si, Gyeonggi-do (KR); LEE, GAEON, 17084 Yongin-si, Gyeonggi-do (KR)
(74) Representative: Gulde & Partner

(57) **Abstract**

A dry electrode manufacturing device is disclosed. The dry electrode manufacturing device may include: an inserting part that supplies an electrode powder for dry electrode manufacturing; a guide chute that passes through the electrode powder supplied from the inserting part; a dispersing rod provided in the guide chute to disperse the electrode powder and adjust a particle size distribution of the electrode powder; and a rolling roll that compresses the electrode powder distributed to have an adjusted, uniform particle size into an electrode member in the form of a sheet that has a set or predetermined thickness.

## Description

### BACKGROUND

### 1. Field

One or more embodiments of the present disclosure relate to a dry electrode manufacturing device and a manufacturing method thereof. In some embodiments, one or more embodiments of the present disclosure relate to a dry electrode manufacturing device for manufacturing a sheet-type or kind dry electrode by using an electrode powder and a manufacturing method thereof.

### 2. Description of the Related Art

Unlike primary batteries, rechargeable batteries are batteries that are designed to repeatedly charge and discharge. Small-capacity rechargeable batteries are used in small, portable electronic devices, such as mobile phones, laptop computers, and camcorders. High-capacity and high-density rechargeable batteries are used as power sources for driving motors in hybrid and electric vehicles or for energy storage.

A rechargeable battery includes an electrode assembly for charging and discharging current, a case or pouch accommodating the electrode assembly and an electrolyte, and an electrode terminal coupled to the electrode assembly and drawn out of the case or pouch. The electrode assembly may be formed as a jelly-roll type or kind, which is formed by winding an electrode and a separator, or as a stack type or kind, which is formed by stacking the electrode and a separator.

In the electrode manufacturing process that is generally available, in addition to the active material, which is the main component of the electrode, a conductive material (e.g., an electrically conductive material), a filler material, and a binder may be mixed with a solvent to form a fluid slurry, which is sprayed or applied onto a current collector, coated, and the liquid solvent is dried. If (e.g., when) the wet method is used, one or more defects may occur due to differences in evaporation speed between the surface and the interior during the drying process of the solvent. Therefore, operation of drying equipment may be difficult, resulting in economic and time losses.

To solve this issue, dry methods have been studied. The dry method manufactures a free standing film through a rolling process in which a dry powder mixed with solid powdery active materials, binders, and/or conductive materials (e.g., electrically conductive materials) is passed between two rolling rolls without using a solvent. An electrode is manufactured by laminating the free standing film on a current collector.

Because the dry method does not provide the drying process, a thicker film electrode plate may be manufactured compared to a film electrode plate manufactured by the wet method. Therefore, the dry method may increase the energy density of rechargeable batteries. However, the dry method may cause uneven (or inconsistent) formability, tensile strength, and mechanical properties of the self-supporting film due to particle size segregation, resulting in a large particle size distribution, that inevitably occurs in the process of mixing, transporting, and feeding dry powder.

Particle size segregation is a phenomenon in which particles of different sizes and densities are mixed and placed in a certain state of motion, resulting in an uneven (or heterogenous) mixture of particles. To address this issue, it is desirable to suppress (or reduce) particle size segregation (e.g., suppress or reduce particle size distribution) of dry powder, expand the width of the self-supporting film, and speed up production. Therefore, developing a dry electrode manufacturing device that may disperse powder efficiently and uniformly (e.g., substantially uniformly) and a manufacturing method thereof are required or desired.

### SUMMARY

One or more aspects of embodiments of the present disclosure are directed toward a dry electrode manufacturing device for manufacturing a dry electrode by uniformly (e.g., substantially uniformly) dispersing an electrode powder for manufacturing the dry electrode. In some embodiments, one or more aspects of embodiments of the present disclosure are directed toward a dry electrode manufacturing method for manufacturing a dry electrode by uniformly (e.g., substantially uniformly) dispersing an electrode powder for manufacturing the dry electrode using the device.

A dry electrode manufacturing device according to one or more embodiments of the present disclosure may include: an inserting part that supplies an electrode powder for dry electrode manufacturing; a guide chute that passes through the electrode powder supplied from the inserting part; a dispersing rod provided in the guide chute to disperse the electrode powder and adjust a particle size distribution of the electrode powder; and a rolling roll that compresses the electrode powder distributed to have uniform (e.g., substantially uniform) particle size into an electrode member in the form of a sheet that has a set or predetermined thickness.

The guide chute may have a gap set to allow the electrode powder to pass through and a width corresponding to the length of a rolling part of the rolling roll.

The guide chute may maintain the height of a stacking level set at the top of the rolling roll of the electrode powder.

The stacking level may be set between the dispersing rod and the rolling roll.

The dispersing rod may be formed as a round rod.

The dispersing rod may be formed as a triangular rod.

The dispersing rod may include a plurality of dispersing rods provided along the width direction of the guide chute.

The dispersing rod may include a plurality of dispersing rods provided along the height direction of the guide chute.

The dispersing rod may include a plurality of dispersing rods provided at least in an upper first row and a lower second row that are spaced apart in the height direction of the guide chute. A number of the plurality of dispersing rods of the lower second row may be one more than a number of the plurality of dispersing rods of the upper first row, based on the width direction, and each of the plurality of dispersing rods of the upper first row may be provided one by one correspondingly between each of the plurality of dispersing rods of the lower second row.

The plurality of dispersing rods of the upper first row and the plurality of dispersing rods of the lower second row each may have substantially the same diameter.

The plurality of dispersing rods may further include a third row below the lower second row, and the plurality of dispersing rods of the third row and the plurality of dispersing rods of the lower second row each may have substantially the same diameter.

The plurality of dispersing rods of the upper first row each may have a first diameter, and the plurality of dispersing rods of the lower second row each may have a second diameter smaller than the first diameter.

The plurality of dispersing rods may further include a third row below the lower second row, and the plurality of dispersing rods of the third row each may have a third diameter smaller than the second diameter of each of the plurality of dispersing rods of the lower second row.

The dispersing rods may include a plurality of dispersing rods provided at least in an upper first row and a lower second row that are spaced apart in the height direction of the guide chute, the plurality of dispersing rods of the upper first row each may have a first diameter, the plurality of dispersing rods of the lower second row each may have a second diameter smaller than the first diameter, a number of the plurality of dispersing rods of the lower second row may be at least two more than a number of the plurality of dispersing rods of the upper first row, based on the width direction, and each of the plurality of dispersing rods of the upper first row may be provided alternately with each of the plurality dispersing rods of the lower second row.

The plurality of dispersing rods may further include a third row below the lower second row, the plurality of dispersing rods of the third row each may have a third diameter smaller than the second diameter of the each of the plurality of dispersing rods of the lower second row, and a number of the plurality of dispersing rods of the third row may be at least three more than the number of the plurality of dispersing rods of the lower second row.

The dispersing rods may include a plurality of dispersing rods provided at least in an upper first row and a lower second row that are spaced apart in the height direction of the guide chute, the plurality of dispersing rods of the upper first row each may have a first diameter, the plurality of dispersing rods of the lower second row each may have a second diameter smaller than the first diameter, a number of the plurality of dispersing rods of the lower second row may be one more than a number of the plurality of dispersing rods of the upper first row, based on the width direction, each of the plurality of dispersing rods of the upper first row may be provided one by one correspondingly between each of the plurality of the dispersing rods of the lower second row, the plurality of dispersing rods may further include a third row below the lower second row, the plurality of dispersing rods of the third row each may have a third diameter smaller than the second diameter of each of the plurality of dispersing rods of the lower second row, a number of the plurality of dispersing rods of the third row may be at least three more than the number of the plurality of dispersing rods of the lower second row, based on the width direction, and each of the plurality dispersing rods of the lower second row may be provided alternately with each of the plurality of dispersing rods of the third row.

A dry electrode manufacturing method according to one or more embodiments of the present disclosure may include: a first step (e.g., act or task) of supplying an electrode powder for dry electrode manufacturing to a guide chute through an inserting part; a second step (e.g., act or task) of passing through the electrode powder and adjusting a particle size distribution of the supplied electrode powder by a dispersing action of a dispersing rod provided in the guide chute; and a third step (e.g., act or task) of compressing the electrode powder distributed to have an adjusted particle size into an electrode member in the form of a sheet that has a set or predetermined thickness on a rolling roll.

In the first step (e.g., act or task), the electrode powder may be inserted from the top of the rolling roll to maintain a height of a set level having a width corresponding to the length of a rolling part of the rolling roll.

In the second step (e.g., act or task), the dispersing rod may include a plurality of dispersing rods provided in the guide chute along the width and height directions that may continuously (e.g., substantially continuously) disperse the electrode powder along the height direction of the guide chute.

In the second step (e.g., act or task), at the top of the guide chute in the height direction, the electrode powder may be dispersed over a wide range in the width direction, and the electrode powder may be dispersed in a range that narrows in the width direction toward the bottom in the height direction.

As such, according to one or more embodiments of the present disclosure, the electrode powder may be dispersed to a uniform (e.g., substantially uniform) particle size distribution by providing a plurality of dispersing rods in a guide chute through which the electrode powder is passed, thereby dispersing the electrode powder in the width direction of the guide chute.

### BRIEF DESCRIPTION OF THE DRAWINGS

The above and other aspects and features of certain embodiments of the present disclosure will be more apparent from the following description taken in conjunction with the accompanying drawings.
FIG. 1 is a perspective view of a dry electrode manufacturing device according to one or more embodiments of the present disclosure.
FIG. 2 is an internal perspective view of a guide chute of FIG. 1.
FIG. 3 is an internal perspective view of a guide chute of a dry electrode manufacturing device according to one or more embodiments of the present disclosure.
FIG. 4 is a perspective view of a dry electrode manufacturing device according to one or more embodiments of the present disclosure.
FIG. 5 is a partially transparent perspective view illustrating the inside of a guide chute in a dry electrode manufacturing device according to one or more embodiments of the present disclosure.
FIG. 6 is a partially transparent perspective view illustrating the inside of a guide chute in a dry electrode manufacturing device according to one or more embodiments of the present disclosure.
FIG. 7 is a partially transparent perspective view illustrating the inside of a guide chute in a dry electrode manufacturing device according to one or more embodiments of the present disclosure.
FIG. 8 is a partially transparent perspective view illustrating the inside of a guide chute in a dry electrode manufacturing device according to one or more embodiments of the present disclosure.
FIG. 9 is a flowchart of a dry electrode manufacturing method according to one or more embodiments of the present disclosure.

### DETAILED DESCRIPTION

In order to sufficiently understand configurations and aspects of embodiments of the present disclosure, one or more embodiments of the present disclosure will be described with reference to the accompanying drawings. It should be noted, however, that embodiments of the present disclosure are not limited to the following example embodiments and may be implemented in one or more suitable forms. Rather, the example embodiments are provided only to illustrate the subject matter of the present disclosure and let those having ordinary skill in the art fully understand the scope of the present disclosure.

The subject matter of the present disclosure will be described more fully hereinafter with reference to the accompanying drawings, in which embodiments of the present disclosure are shown. As those skilled in the art would realize, the described embodiments may be modified in one or more suitable different ways, all without departing from the scope of the present disclosure. The drawings and description are to be regarded as illustrative in nature and not restrictive. Like reference numerals designate like elements throughout the specification.

Unless otherwise specially noted in the present disclosure, the singular forms, "a," "an," and "the," are intended to include the plural forms unless the context clearly indicates otherwise. Further, the utilization of "may" when describing embodiments of the present disclosure refers to "one or more embodiments of the present disclosure." In some embodiments, unless otherwise specially noted, the phrase, "A or B," "A and/or B," or "A/B," may indicate "A but not B," "B but not A," or "A and B." The terms, "comprises/includes" and/or "comprising/including" used in the present disclosure, do not exclude the presence or addition of one or more other components.

Although terms of "first," "second," and the like are used to explain one or more suitable constituent elements, the constituent elements are not limited to such terms. These terms are only used to distinguish one constituent element from another constituent element.

It is to be understood that if (e.g., when) one component is referred to as being "connected" or "coupled" to another component, it may be connected or coupled directly to another component or there may be other intervening components. In some embodiments, it is to be understood that if (e.g., when) one component is referred to as being "connected or coupled directly" to another component, there may be no other intervening components.

Throughout the specification, the terms "comprise" and "have" are intended to specify the presence of stated features, integers, steps (e.g., acts or tasks), operations, constituent elements, components or a (e.g., any suitable) combination thereof, but do not preclude the presence or addition of one or more other features, integers, steps (e.g., acts or tasks), operations, constituent elements, components, and/or groups thereof. Therefore, unless explicitly described to the contrary, the term "comprise" and variations, such as "comprises" or "comprising," will be understood to imply the inclusion of stated elements but not the exclusion of any other suitable elements.

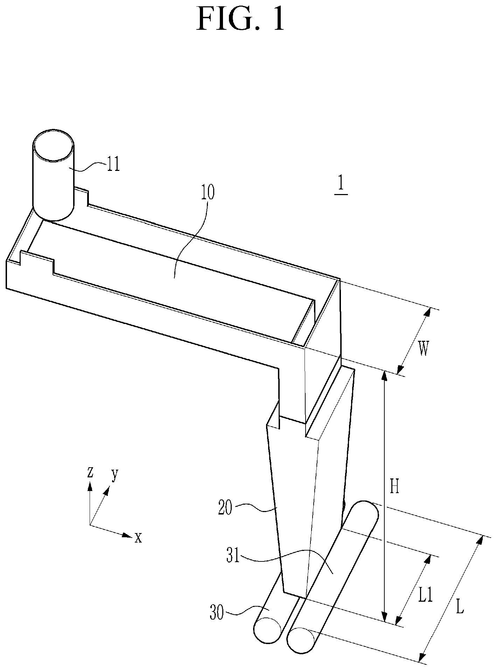

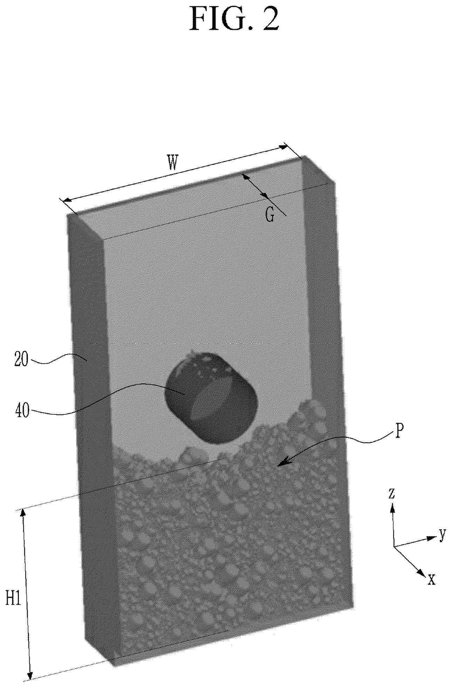

FIG. 1 is a perspective view of a dry electrode manufacturing device according to one or more embodiments of the present disclosure, and FIG. 2 is an internal perspective view of a guide chute of FIG. 1. Referring to FIGS. 1-2, a dry electrode manufacturing device 1 of the first embodiment may include an inserting part 10, a guide chute 20, a dispersing rod 40, and/or a rolling roll 30 to uniformly (e.g., substantially uniformly) disperse a powder P for manufacturing a dry electrode to manufacture a dry electrode for a rechargeable battery.

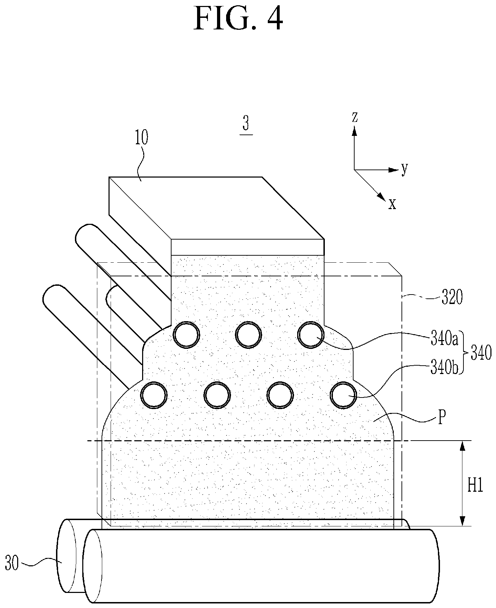

The dry electrode manufacturing device 1 may manufacture electrodes for rechargeable batteries using a dry method. In some embodiments, the dry electrode manufacturing device 1 may insert the dry powder P from the top of the rolling roll 30 to maintain a height H1 (see FIGS. 2 and 4) at a level set in the guide chute 20, pass the powder P maintaining the height H1 through the rolling roll 30, and compress the powder P on the rolling roll 30, thereby manufacturing an electrode member in the form of a film or sheet.

At this step (e.g., act or task), the dry electrode manufacturing device 1 may uniformly (e.g., substantially uniformly) distribute the particle size in the width direction (y-axis direction) after the dry powder P is added, despite the particle size segregation phenomenon that may occur if (e.g., when) the powder P is inserted. The width direction (y-axis direction) may correspond to a width W of the inserting part 10 and the guide chute 20 and a length L of the rolling roll 30. The length L of the rolling roll 30 may be formed to be larger than the width W of the inserting part 10 and the guide chute 20 (L>W).

The dry electrode manufacturing device 1 may insert the dry powder P such that the dry power P has a uniform (e.g., substantially uniform) particle size distribution in the width direction (y-axis direction) even under conditions where the width W of the inserting part 10 and the height H set between the inserting part 10 and the rolling roll 30 are limited.

The inserting part 10 may uniformly (e.g., substantially uniformly) distribute the powder P inserted into the inserting part 11 in the width direction (y-axis direction) and supply the power P to the guide chute 20. The guide chute 20 may pass the electrode powder P uniformly (e.g., substantially uniformly) supplied from the inserting part 10 in the width direction (y-axis direction).

For example, the guide chute 20 may have a gap G set to allow the electrode powder P to pass and the width W corresponding to a length L1 of a rolling part 31 of the rolling roll 30 (L1=W). The guide chute 20 may maintain the height H1 of the stacking level set at the top of the rolling roll 30 for the electrode powder P (see FIG. 4). The stacking level may be set between the dispersing rod 40 and the rolling roll 30 so that advantageously the powder P may be continuously (e.g., substantially continuously) supplied to the rolling roll 30 while maintaining the width W.

The dispersing rod 40 may be provided in the guide chute 20 and distribute the electrode powder P to have a uniform (e.g., substantially uniform) particle size. The dispersing rod 40 may be provided in the guide chute 20 and disperse the electrode powder P falling from the inserting part 10 to the rolling roll 30 in the width direction (y-axis direction). Therefore and advantageously, the dry powder P may be dispersed and inserted to have a uniform (e.g., substantially uniform) particle size distribution in the width direction (y-axis direction).

For example, the dispersing rod 40 may be formed as a round rod. The curved surface of the round rod may face the width direction. Therefore, the round rod may send the powder P having a large particle size far in the width direction (y-axis direction) while colliding with some of the powder P that falls from the inserting part 10 to the guide chute 20.

In some embodiments, the powder P having a relatively small particle size may fall smoothly along the curved surface of the round rod. The dispersing action of the dispersing rod 40 may enable a more uniform (e.g., substantially uniform) particle size distribution of the powder P in the width direction (y-axis direction) of the guide chute 20.

The rolling roll 30 may compress the electrode powder P distributed to have a uniform (e.g., substantially uniform) particle size into an electrode member in the form of a sheet that has a set or predetermined thickness. The electrode member may be laminated on a current collector to form a dry electrode of the rechargeable battery. As a result, it may obtain an electrode member using a dry method.

Hereinafter, one or more embodiments of the present disclosure will be described. Compared to the previously-described one or more embodiments, descriptions of substantially the same components may not be repeated and descriptions of different components may be described.

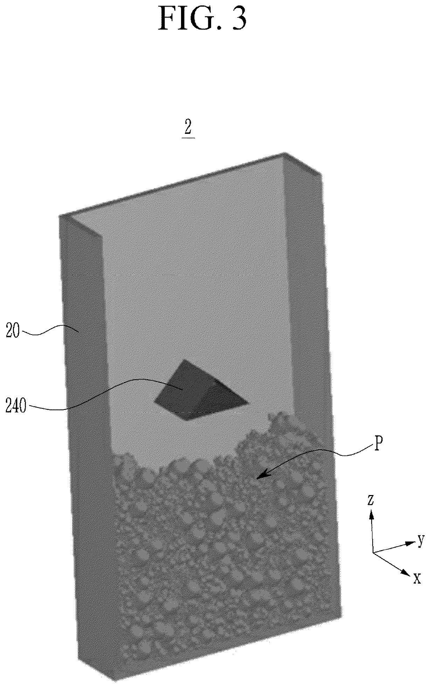

FIG. 3 is an internal perspective view of a guide chute of a dry electrode manufacturing device according to one or more embodiments of the present disclosure. Referring to FIG. 3, in a dry electrode manufacturing device 2 of a second embodiment, a dispersing rod 240 may be formed as a triangular rod. An inclined surface of the triangular rod may face both sides (e.g., two opposing surfaces) in the width direction.

Therefore, the triangular rod may provide an inclined surface to the powder P falling from the inserting part 10 to the guide chute 20 and guide the powder P to the inclined surface, thereby sending the powder P in the width direction (y-axis direction). The dispersing action of the dispersing rod 240 may enable a more uniform (e.g., substantially uniform) particle size distribution of the powder P in the width direction (y-axis direction) of the guide chute 20.

The dispersing rod 240 may have a cross-sectional shape having an inclination angle greater than the angle of repose of the powder P. Therefore and advantageously, the powder P may be prevented from remaining on the dispersing rod 240 (or an amount or occurrence of the powder P remaining on the dispersing rod 240 may be reduced). The second embodiment illustrates a triangular rod, but it may be formed into an inverted V-shaped rod and/or a polygonal rod.

FIG. 4 is a perspective view of a dry electrode manufacturing device according to one or more embodiments of the present disclosure. Referring to FIG. 4, in a dry electrode manufacturing device 3 of a third embodiment, dispersing rods 340 may be provided in plurality along the width direction (y-axis direction) of a guide chute 320. The plurality of dispersing rods 340 may increase the size of the guide chute 320 in the width direction (y-axis direction), thereby improving the productivity of the dry electrode.

The dispersing rods 340 may be provided in plurality along the height direction (z-axis direction) of the guide chute 320. The plurality of dispersing rods 340 along the height direction (z-axis direction) of the guide chute 320 may repeatedly perform the process of uniformizing (e.g., substantially uniformizing) the particle size distribution of the powder P in the height direction, thereby making the overall particle size distribution of the power P more uniform (e.g., substantially more uniform).

The dispersing rod 340 may include the upper first row and the lower second row that are spaced apart in the height direction (z-axis direction) of the guide chute 320. The number of the dispersing rods of second row 340b may be one more than the number of the dispersing rods of first row 340a and, based on the width direction (y-axis direction), the dispersing rods of first row 340a may be provided one by one correspondingly between the dispersing rods of second row 340b.

For example, the dispersing rods of first row 340a may be provided in three rods to disperse the powder P first in the width direction, and the dispersing rods of second row 340b may be provided in four rods to disperse the powder P second time in the width direction.

The dispersing rod of first row 340a and the dispersing rod of second row 340b each may have substantially the same diameter. The dispersing rod of first row 340a and the dispersing rod of second row 340b may send the powder P falling temporarily and stepwise in the width direction (y-axis direction) and height direction (z-axis direction) of the guide chute 320 in the width direction (y-axis direction) and gently fall along the curved surface of the round rod. Due to the dispersing action of the dispersing rod 340, the powder P may be dispersed and inserted to have a more uniform (e.g., substantially more uniform) particle size distribution in the width direction (y-axis direction) of the guide chute 320.

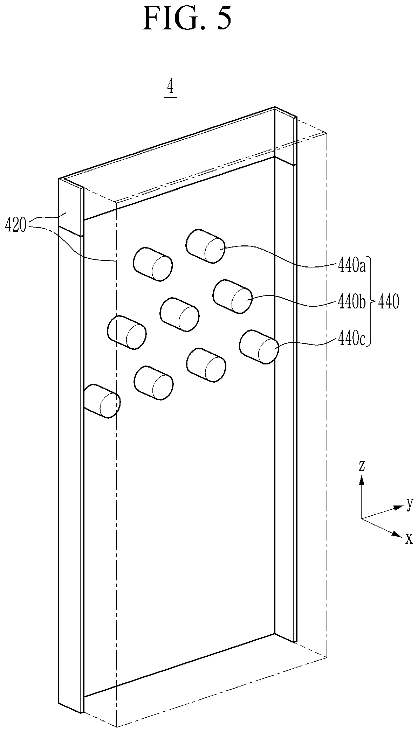

FIG. 5 is a partially transparent perspective view illustrating the inside of a guide chute in a dry electrode manufacturing device according to one or more embodiments of the present disclosure. Referring to FIG. 5, in a dry electrode manufacturing device 4 of a fourth embodiment, dispersing rods 440 may be provided in plurality along the width direction (y-axis direction) of a guide chute 420. Advantageously, the plurality of dispersing rods 440 may increase the size of the guide chute 420 in the width direction (y-axis direction), thereby improving the productivity of the dry electrode.

The dispersing rods 440 may be provided in plurality along the height direction (z-axis direction) of the guide chute 420. The plurality of dispersing rods 440 along the height direction (z-axis direction) of the guide chute 420 may repeatedly perform the process of uniformizing (e.g., substantially uniformizing) the particle size distribution of the powder P in the height direction, thereby making the overall particle size distribution of the power P more uniform (e.g., substantially more uniform).

The dispersing rod 440 may include the upper first row and the lower second row that are spaced apart in the height direction (z-axis direction) of the guide chute 420. The number of the dispersing rods of second row 440b may be one more than the number of the dispersing rods of first row 440a and based on the width direction (y-axis direction), the dispersing rods of first row 440a may be provided one by one correspondingly between the dispersing rods of second row 440b.

The dispersing rod 440 may further include a third row below the lower second row, and the number of the dispersing rods of third row 440c may be one more than the number of the dispersing rods of second row 440b and based on the width direction (y-axis direction), the dispersing rods of second row 440b may be provided one by one correspondingly between the dispersing rods of third row 440c.

For example, the dispersing rods of first row 440a may be provided in two rods to disperse the powder P in the width direction, and the dispersing rods of second row 440b may be provided in three rods, which may be one more than the number of the dispersing rods of first row 440a, to further disperse the powder P in the width direction. The dispersing rods of third row 440c may be provided in four rods, which may be one more than the number of the dispersing rods of second row 440b, to further disperse the powder P in the width direction.

The dispersing rod of first row 440a and the dispersing rod of second row 440b each may have substantially the same diameter. The dispersing rod of third row 440c and the dispersing rod of second row 440b each may have substantially the same diameter.

The dispersing rod of first row 440a, the dispersing rod of second row 440b, and the dispersing rod of third row 440c may send the powder P falling temporarily and stepwise in the width direction (y-axis direction) and height direction (z-axis direction) of the guide chute 420 in the width direction (y-axis direction) and gently fall along the curved surface of the round rod. Due to the dispersing action of the dispersing rod 440, the powder P may be dispersed and inserted to have a more uniform (e.g., substantially more uniform) particle size distribution in the width direction (y-axis direction) of the guide chute 420.

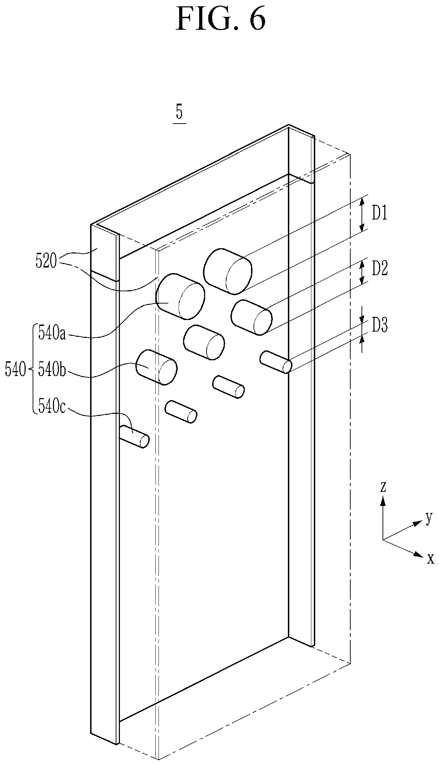

FIG. 6 is a partially transparent perspective view illustrating the inside of a guide chute in a dry electrode manufacturing device according to one or more embodiments of the present disclosure. Referring to FIG. 6, in a dry electrode manufacturing device 5 of a fifth embodiment, a dispersing rod of first row 540a may be formed to have a first diameter D1, and a dispersing rod of second row 540b may be formed to have a second diameter D2 smaller than the first diameter D1, and a dispersing rod of third row 540c may be formed to have a third diameter D3 smaller than the second diameter D2.

The dispersing rod of first row 540a, the dispersing rod of second row 540b, and the dispersing rod of third row 540c may send the powder P falling temporarily and stepwise in the width direction (y-axis direction) and height direction (z-axis direction) of the guide chute 520 in the width direction (y-axis direction) and gently fall along the curved surface of the round rod. The dispersing action of the dispersing rod 540 may enable a more uniform (e.g., substantially more uniform) particle size distribution of the powder P in the width direction (y-axis direction) of the guide chute 520.

At this step (e.g., act or task), the dispersing rod of first row 540a may be formed to have the first diameter D1 and disperse the powder P over the entire width direction (y-axis direction). In the next step (e.g., act or task), the dispersing rod of second row 540b may be formed to have the second diameter D2 and disperse the powder P over the entire width direction (y-axis direction) by three rods. One dispersing rod of second row 540b may disperse the powder P within a narrower range than one dispersing rod of first row 540a.

The dispersing rod of third row 540c may be formed to have the second diameter D2 and disperse the powder P over the entire width direction (y-axis direction) by three rods. One dispersing rod of third row 540c may disperse the powder P within a narrower range than one dispersing rod of second row 540b.

In some embodiments, in this way, as the number increases stage by stage through the upper first row, the lower second row, and the third row, the range where one dispersing rod 540 disperses the powder P may become smaller, and the diameter may decrease. In some embodiments, the distance at which the dispersing rods 540 in each row disperse the powder P may become smaller, enabling a more uniform (e.g., substantially more uniform) particle size distribution across the entire width direction.

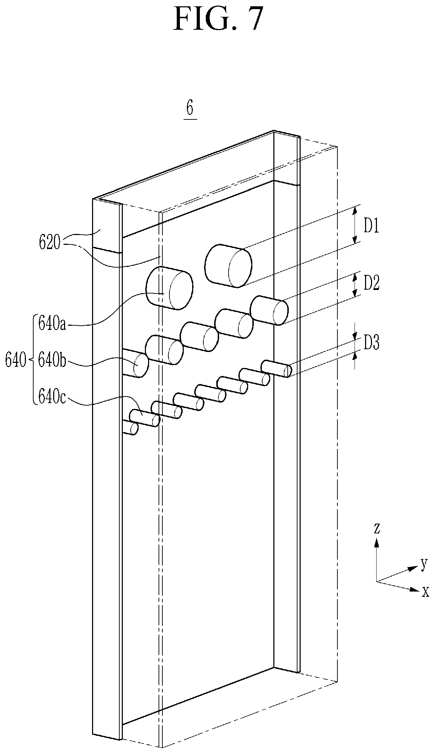

FIG. 7 is a partially transparent perspective view illustrating the inside of a guide chute in a dry electrode manufacturing device according to one or more embodiments of the present disclosure. Referring to FIG. 7, in a dry electrode manufacturing device 6 of a sixth embodiment, a dispersing rod 640 may include the upper first row, the lower second row, and/or the third row below the lower second row, that are spaced apart in the height direction (z-axis direction) of a guide chute 620.

The number of the dispersing rods of second row 640b may be two more than the number of the dispersing rods of first row 640a, and the number of the dispersing rods of third row 640c may be two more than the number of the dispersing rods of second row 640b. Based on the width direction (y-axis direction), the dispersing rods of first row 640a may be provided alternately with the dispersing rods of second row 640b, and the dispersing rods of second row 640b may be provided alternately with the dispersing rods of third row 640c.

For example, the dispersing rods of first row 640a may be provided in two rods to disperse the powder P in the width direction, and the dispersing rods of second row 640b may be provided in five rods, which may be two more than the number of the dispersing rods of first row 640a, to further disperse the powder P in the width direction. The dispersing rods of third row 640c may be provided in eight rods, which may be at least three more than the number of the dispersing rods of second row 640b, to further disperse the powder P in the width direction.

The dispersing rod of first row 640a and the dispersing rod of second row 640b each may have substantially the same diameter. The dispersing rod of third row 640c and the dispersing rod of second row 440b each may have substantially the same diameter.

Compared to the fifth embodiment, in the sixth embodiment, as the number increases step by step through the upper first row, the lower second row, and the third row, the range where one dispersing rod 540 disperses the powder P may become smaller, and the diameter may decrease. In some embodiments, the distance at which the dispersing rods 540 in each row disperse the powder P may become smaller, enabling a more uniform (e.g., substantially more uniform) particle size distribution across the entire width direction.

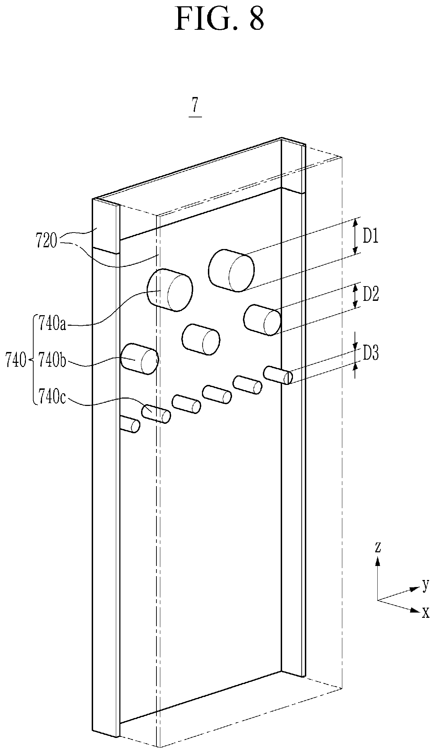

FIG. 8 is a partially transparent perspective view illustrating the inside of a guide chute in a dry electrode manufacturing device according to one or more embodiments of the present disclosure. Referring to FIG. 8, in a dry electrode manufacturing device 7 of a seventh embodiment, a dispersing rod 740 may include the upper first row, the lower second row, and the third row below the lower second row, that are spaced apart in the height direction (z-axis direction) of a guide chute 720.

The number of the dispersing rods of second row 740b may be one more than the number of dispersing rods of first row 740a, and the number of the dispersing rods of third row 740c may be three more than the number of the dispersing rods of second row 740b. Based on the width direction (y-axis direction), the dispersing rods of first row 740a may be provided alternately with the dispersing rods of second row 740b, and the dispersing rods of second row 740b may be provided alternately with the dispersing rods of third row 740c.

For example, the dispersing rods of first row 740a may be provided in two rods to disperse the powder P in the width direction, and the dispersing rods of second row 740b may be provided in three rods, which may be one more than the number of the dispersing rods of first row 740a, to further disperse the powder P in the width direction. The dispersing rods of third row 740c may be provided in six rods, which may be three more than the number of the dispersing rods of second row 740b, to further disperse the powder P in the width direction.

The dispersing rod of first row 740a may be formed to have the first diameter D1, and the dispersing rod of second row 740b may be formed to have the second diameter D2 smaller than the first diameter D1. The dispersing rod of third row 740c may be formed to have the third diameter D3 smaller than the second diameter D2.

For example, the dispersing rods of first row 740a may be provided in two rods to disperse the powder P in the width direction, and the dispersing rods of second row 740b may be provided in three rods to further disperse the powder P in the width direction. The dispersing rods of third row 740c may be provided in six rods to further disperse the powder P in the width direction.

Compared to the fifth embodiment, in the seventh embodiment, as the number of the dispersing rods of third row 740c is further increased, the range where the dispersing rods of third row 740c disperses the powder P may become smaller, enabling a more uniform (e.g., substantially more uniform) particle size distribution across the entire width than in the fifth embodiment.

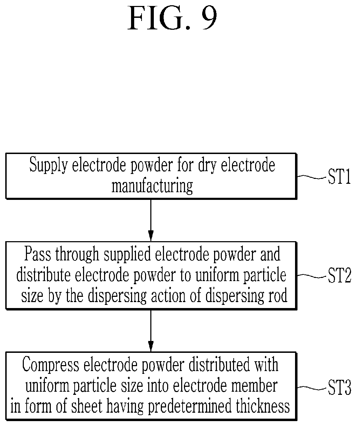

FIG. 9 is a flowchart of a dry electrode manufacturing method according to one or more embodiments of the present disclosure. Referring to FIG. 9, a dry electrode manufacturing method of one or more embodiments of the present disclosure may include a first step (e.g., act or task) (ST1), a second step (e.g., act or task) (ST2), and a third step (e.g., act or task) (ST3). For convenience, the description will be made with reference to the dry electrode manufacturing device 1 of the first embodiment according to FIGS. 1-2.

In the first step (e.g., act or task) (ST1), an electrode powder P for dry electrode manufacturing may be supplied. In the first step (e.g., act or task) (ST1), the electrode powder P may be inserted from the top of the rolling roll 30 to maintain the height H1 at a set level having the width W corresponding to the length L1 of the rolling part 31 of the rolling roll 30.

In the second step (e.g., act or task) (ST2), the supplied electrode powder P may pass through, and the electrode powder P may be distributed to a uniform (e.g., substantially more uniform) particle size by the dispersing action of the dispersing rod 40. In the second step (e.g., act or task) (ST2), the guide chute 320 may be provided with a plurality of dispersing rods 340 along the width direction (y-axis direction) and the height direction (z-axis direction) to continuously (e.g., substantially continuously) disperse the electrode powder P along the height direction of the guide chute 320 (see the third embodiment of FIG. 4).

In some embodiments, in the second step (e.g., act or task) (ST2), one dispersing rod 340 may spread the electrode powder P over a wide range in the width direction (y-axis direction) above the guide chute 320 in the height direction (z-axis direction), and one dispersing rod 340 may disperse the electrode powder P in a range that may become narrower in the width direction as it goes downward in the height direction. Because the number of the dispersing rods 340 increases downward, the electrode powder P may be dispersed over a wide overall range in the width direction (y-axis direction).

In the third step (e.g., act or task) (ST3), the electrode powder P distributed to have a uniform (e.g., substantially uniform) particle size may be compressed into an electrode member in the form of a sheet that has a set or predetermined thickness. The electrode member may be laminated on a current collector to form a dry electrode of the rechargeable battery. As a result, a dry electrode may be obtained through the dry electrode manufacturing method of one or more embodiments of the present disclosure.

While the subject matter of the present disclosure has been described in connection with what is presently considered to be practical embodiments, it is to be understood that the present disclosure is not limited to the disclosed embodiments, but, in some embodiments, is intended to cover one or more suitable modifications and equivalent arrangements included within the scope of the appended claims, and equivalents thereof. It therefore will be understood that one or more embodiments described above are just illustrative but not limitative in all aspects.

**Description of symbols**

| | | | |
|---|---|---|---|
| 1, 2, 3, 4, 5, 6, 7: | Dry electrode manufacturing device | | |
| 10: | Inserting part | | |
| 20, 320, 420, 520, 620, 720: | Guide chute | | |
| 30: | Rolling roll | | |
| 31: | Rolling part | | |
| 40, 240, 340, 440, 540, 640, 740: | Dispersing load | | |
| D1: | First diameter | D2: | Second diameter |
| D3: | Third diameter | G: | Gap |
| H: | Height | H1: | Height |
| L: | Length | L1: | Length |
| P: | Powder | W: | Width |
| 340a: | Dispersing rod of first row | 340b: | Dispersing rod of second row |
| 440a: | Dispersing rod of first row | 440b: | Dispersing rod of second row |
| 440c: | Dispersing rod of third row | 540a: | Dispersing rod of first row |
| 540b: | Dispersing rod of second row | 540c: | Dispersing rod of third row |
| 640a: | Dispersing rod of first row | 640b: | Dispersing rod of second row |
| 640c: | Dispersing rod of third row | 740a: | Dispersing rod of first row |
| 740c: | Dispersing rod of third row | 740b: | Dispersing rod of second row |

## Claims

1. A dry electrode manufacturing device (1, 2, 3, 4, 5, 6, 7), comprising:
an inserting part (10, 11) that supplies an electrode powder for dry electrode manufacturing;
a guide chute (20, 320, 420, 520, 620, 720) that passes through the electrode powder supplied from the inserting part (10, 11);
a dispersing rod (40, 240, 340, 440, 540, 640, 740) provided in the guide chute (20, 320, 420, 520, 620, 720) to disperse the electrode powder and adjust a particle size distribution of the electrode powder; and
a rolling roll (30) that compresses the electrode powder distributed to have a uniform particle size into an electrode member in the form of a sheet that has a set thickness.

2. The dry electrode manufacturing device (1, 2, 3, 4, 5, 6, 7) as claimed in claim 1, wherein:
the guide chute (20, 320, 420, 520, 620, 720) has a gap (G) set to allow the electrode powder to pass through and a width corresponding to the length of a rolling part (31) of the rolling roll (30).

3. The dry electrode manufacturing device (1, 2, 3, 4, 5, 6, 7) as claimed in claim 2, wherein:
the guide chute (20, 320, 420, 520, 620, 720) maintains the height of a stacking level set at the top of the rolling roll (30) of the electrode powder and/or wherein:
the stacking level is set between the dispersing rod (40, 240, 340, 440, 540, 640, 740) and the rolling roll (30).

4. The dry electrode manufacturing device (1, 2, 3, 4, 5, 6, 7) as claimed in claims 1 to 3, wherein:
the dispersing rod (40, 240, 340, 440, 540, 640, 740) is formed as a round rod.

5. The dry electrode manufacturing device (1, 2, 3, 4, 5, 6, 7) as claimed in claims 1 to 4, wherein:
the dispersing rod (40, 240, 340, 440, 540, 640, 740) is formed as a triangular rod.

6. The dry electrode manufacturing device (1, 2, 3, 4, 5, 6, 7) as claimed in claims 1 to 5, wherein:
the dispersing rod (40, 240, 340, 440, 540, 640, 740) comprises a plurality of dispersing rods (40, 240, 340, 440, 540, 640, 740) provided along the width direction of the guide chute (20, 320, 420, 520, 620, 720).

7. The dry electrode manufacturing device (1, 2, 3, 4, 5, 6, 7) as claimed in claims 1 to 6, wherein:
the dispersing rod (40, 240, 340, 440, 540, 640, 740) comprises a plurality of dispersing rods (40, 240, 340, 440, 540, 640, 740) provided along the height direction of the guide chute (20, 320, 420, 520, 620, 720).

8. The dry electrode manufacturing device (1, 2, 3, 4, 5, 6, 7) as claimed in claims 1 to 7, wherein:
the dispersing rod (40, 240, 340, 440, 540, 640, 740) comprises a plurality of dispersing rods (40, 240, 340, 440, 540, 640, 740) provided at least in an upper first row and a lower second row that are spaced apart in the height direction of the guide chute (20, 320, 420, 520, 620, 720),
a number of the plurality of dispersing rods (40, 240, 340, 440, 540, 640, 740) of the lower second row is one more than a number of the plurality of dispersing rods (40, 240, 340, 440, 540, 640, 740) of the upper first row, based on the width direction, and
each of the plurality of dispersing rods (40, 240, 340, 440, 540, 640, 740) of the upper first row is provided one by one correspondingly between each of the plurality of dispersing rods (40, 240, 340, 440, 540, 640, 740) of the lower second row.

9. The dry electrode manufacturing device (1, 2, 3, 4, 5, 6, 7) as claimed in claim 8, wherein:
the plurality of dispersing rods (40, 240, 340, 440, 540, 640, 740) of the upper first row and the plurality of dispersing rods (40, 240, 340, 440, 540, 640, 740) of the lower second row each have the same diameter.

10. The dry electrode manufacturing device (1, 2, 3, 4, 5, 6, 7) as claimed in claim 8, wherein:
the plurality of dispersing rods (40, 240, 340, 440, 540, 640, 740) further comprise a third row below the lower second row, and
the plurality of dispersing rods (40, 240, 340, 440, 540, 640, 740) of the third row and the plurality of dispersing rods (40, 240, 340, 440, 540, 640, 740) of the lower second row each have the same diameter.

11. The dry electrode manufacturing device (1, 2, 3, 4, 5, 6, 7) as claimed in claim 8, wherein:
the plurality of dispersing rods (40, 240, 340, 440, 540, 640, 740) of the upper first row each have a first diameter (D1), and
the plurality of dispersing rods (40, 240, 340, 440, 540, 640, 740) of the lower second row each have a second diameter (D2) smaller than the first diameter (D1) and/or wherein:
the plurality of dispersing rods (40, 240, 340, 440, 540, 640, 740) further comprise a third row below the lower second row, and
the plurality of dispersing rods (40, 240, 340, 440, 540, 640, 740) of the third row each have a third diameter (D3) smaller than the second diameter (D2).

12. The dry electrode manufacturing device (1, 2, 3, 4, 5, 6, 7) as claimed in claims 1 to 11, wherein:
the dispersing rod (40, 240, 340, 440, 540, 640, 740) comprises a plurality of dispersing rods (40, 240, 340, 440, 540, 640, 740) provided at least in an upper first row and a lower second row that are spaced apart in the height direction of the guide chute (20, 320, 420, 520, 620, 720),
the plurality of dispersing rods (40, 240, 340, 440, 540, 640, 740) of the upper first row each have a first diameter (D1),
the plurality of dispersing rods (40, 240, 340, 440, 540, 640, 740) of the lower second row each have a second diameter (D2) smaller than the first diameter (D1),
a number of the plurality of dispersing rods (40, 240, 340, 440, 540, 640, 740) of the lower second row is at least two more than a number of the plurality of dispersing rods (40, 240, 340, 440, 540, 640, 740) of the upper first row, based on the width direction, and
each of the plurality of dispersing rods (40, 240, 340, 440, 540, 640, 740) of the upper first row is provided alternately with each of the plurality of dispersing rods (40, 240, 340, 440, 540, 640, 740) of the lower second row and/or wherein:
the plurality of dispersing rods (40, 240, 340, 440, 540, 640, 740) further comprise a third row below the lower second row,
wherein the plurality of dispersing rods (40, 240, 340, 440, 540, 640, 740) of the third row each have a third diameter (D3) smaller than the second diameter (D2) of each of the plurality of dispersing rods (40, 240, 340, 440, 540, 640, 740) of the lower second row, and
wherein a number of the plurality of dispersing rods (40, 240, 340, 440, 540, 640, 740) of the third row is at least three more than the number of the plurality of dispersing rods (40, 240, 340, 440, 540, 640, 740) of the lower second row.

13. The dry electrode manufacturing device (1, 2, 3, 4, 5, 6, 7) as claimed in claims 1 to 12, wherein:
the dispersing rod (40, 240, 340, 440, 540, 640, 740) comprises a plurality of dispersing rods (40, 240, 340, 440, 540, 640, 740) provided at least in an upper first row and a lower second row that are spaced apart in the height direction of the guide chute (20, 320, 420, 520, 620, 720),
the plurality of dispersing rods (40, 240, 340, 440, 540, 640, 740) of the upper first row each have a first diameter (D1),
the plurality of dispersing rods (40, 240, 340, 440, 540, 640, 740) of the lower second row each have a second diameter (D2) smaller than the first diameter (D1),
a number of the plurality of dispersing rods (40, 240, 340, 440, 540, 640, 740) of the lower second row is one more than a number of the plurality of dispersing rods (40, 240, 340, 440, 540, 640, 740) of the upper first row, based on the width direction,
each of the plurality of dispersing rods (40, 240, 340, 440, 540, 640, 740) of the upper first row is provided between each of the plurality of dispersing rods (40, 240, 340, 440, 540, 640, 740) of the lower second row,
the plurality of dispersing rods (40, 240, 340, 440, 540, 640, 740) further comprise a third row below the lower second row,
the plurality of dispersing rods (40, 240, 340, 440, 540, 640, 740) of the third row each have a third diameter (D3) smaller than the second diameter (D2) of the lower second row,
a number of the plurality of dispersing rods (40, 240, 340, 440, 540, 640, 740) of the third row is at least three more than the number of the plurality of dispersing rods (40, 240, 340, 440, 540, 640, 740) of the lower second row, based on the width direction, and
each of the plurality of dispersing rods (40, 240, 340, 440, 540, 640, 740) of the lower second row is provided alternately with each of the plurality of dispersing rods (40, 240, 340, 440, 540, 640, 740) of the third row.

14. A dry electrode manufacturing method, comprising:
a first act of supplying an electrode powder for dry electrode manufacturing to a guide chute (20, 320, 420, 520, 620, 720) through an inserting part (10, 11);
a second act of passing through the electrode powder and adjusting a particle size distribution of the supplied electrode powder by a dispersing action of a dispersing rod (40, 240, 340, 440, 540, 640, 740) provided in the guide chute (20, 320, 420, 520, 620, 720); and
a third act of compressing the electrode powder distributed to have an adjusted particle size into an electrode member in the form of a sheet that has a set thickness on a rolling roll (30).

15. The dry electrode manufacturing method as claimed in claim 14, wherein:
in the first act, the electrode powder is inserted from the top of the rolling roll (30) to maintain a height of a set level having a width corresponding to the length of a rolling part (31) of the rolling roll (30) and, wherein:
in the second act, the dispersing rod (40, 240, 340, 440, 540, 640, 740) comprises a plurality of dispersing rods (40, 240, 340, 440, 540, 640, 740) provided in the guide chute (20, 320, 420, 520, 620, 720) along the width and height directions that continuously disperse the electrode powder along the height direction of the guide chute (20, 320, 420, 520, 620, 720) or wherein:
in the second act, at the top of the guide chute (20, 320, 420, 520, 620, 720) in the height direction, the electrode powder is dispersed over a wide range in the width direction, and
the electrode powder is dispersed in a range that narrows in the width direction toward the bottom in the height direction.
